# EUROPÄISCHE PATENTSCHRIFT

(11) **EP 3 376 188 B1**
(45) Veröffentlichungstag und Bekanntmachung des Hinweises auf die Patenterteilung: **29.01.2020**
(21) Anmeldenummer: 18158218.0
(22) Anmeldetag: 22.02.2018
(51) Int. Cl.: G01K 1/00, F01N 3/20, G01L 19/00

(54) **MESSVORRICHTUNG**
MEASUREMENT APPARATUS
DISPOSITIF DE MESURE

(30) Priorität: 14.03.2017 DE 102017002450
(43) Veröffentlichungstag der Anmeldung: 19.09.2018
(73) Patentinhaber: Hydac Fluidtechnik GmbH, 66280 Sulzbach/Saar (DE)
(72) Erfinder: Kattler, Frank, 66346 Püttlingen (DE); Groh, Christian, 66453 Gersheim (DE)
(74) Vertreter: Bartels und Partner, Patentanwälte

(56) Entgegenhaltungen:
- EP-A1- 1 553 270
- EP-A1- 2 580 437
- WO-A1-2005/029029
- DE-A1-102008 043 323
- US-A1- 2003 019 298

## Beschreibung

Die Erfindung betrifft eine Messvorrichtung zur Bestimmung eines Betriebsparameters, wie Druck oder Temperatur, einer wasserhaltigen Flüssigkeit, insbesondere einer wässrigen Harnstofflösung mit den Merkmalen im Oberbegriff von Anspruch 1.

Dahingehende Flüssigkeiten haben infolge ihres Wasseranteils die Eigenschaft, sich beim Gefrieren auszudehnen, was infolge der damit einhergehenden Volumenzunahme zur Schädigung des die Flüssigkeit aufnehmenden Gehäuses und/oder der in demselben aufgenommenen Messfläche, regelmäßig in Form einer Messmembran, der Messeinrichtung führen kann. Eine solche wasserhaltige Flüssigkeit kann beispielsweise eine wässrige Harnstofflösung sein, die Anwendung findet bei der selektiven katalytischen Reduktion von Stickoxiden in Abgasen. Eine derartige Abgasnachbehandlung ist zur Reinhaltung der Luft notwendig und kann bei Feuerungsanlagen, Müllverbrennungsanlagen, Gasturbinen und Verbrennungsmotoren, wie beispielsweise bei dieselmotorisch betriebenen Schiffen, Baufahrzeugen, Kraftfahrzeugen, Kränen sowie stationären Antrieben und Notstromaggregaten zum Einsatz kommen. Für eine einwandfreie Reduktion der Stickoxide ist es notwendig, eine exakt dosierte Menge der wässrigen Harnstofflösung in das Abgas einzuspritzen.

Mit den hohen Anforderungen an die Güte der Abgasreinigung einhergehend werden hohe Anforderungen an die Genauigkeit der Messungen, insbesondere bezogen auf den Druck und/oder die Temperatur der wässrigen Harnstofflösung, gestellt. Je besser die Qualität der jeweiligen Messung, umso besser kann eine übergeordnete Anlagen- oder Systemsteuerung den Einspritzvorgang in den Abgasstrang für eine maximale Stickoxydreduzierung durchführen. Um die benötigten hohen Messgenauigkeiten zu erreichen, ist es demgemäß notwendig, die Messeinrichtung entsprechend "empfindlich" auszugestalten, wozu mit beiträgt, die die Messfläche bildende Messmembran derart dünnwandig auszubilden, dass sie auf Änderung von Druck- und/oder Temperaturwerten in der Flüssigkeit unmittelbar reagiert. Dünne Membranen sind jedoch anfällig für Beschädigungen, wie Einreißen, die entstehen, wenn sie Überbeanspruchungen ausgesetzt sind, wie sie sich beispielhaft ergeben, wenn in Räume eingeschlossene gefrierende Flüssigkeiten sich ausdehnen und dabei eine schädigende Krafteinleitung auf die Messmembran als der wirksamen Messfläche der Messeinrichtung ausüben. Insbesondere bei stillgesetzten Abgasnachbehandlungseinrichtungen, also bei abgeschaltetem Motor, kommt es dann durch die gefrierende und sich infolgedessen ausdehnende Flüssigkeit zu Schädigungen an der Messmembran respektive der Messfläche.

Um der vorstehend aufgezeigten Problematik zu begegnen, ist in der DE 10 2012 010 981 A1 bei einem System zur Abgasnachbehandlung bei einem Verbrennungsmotor bereits vorgeschlagen worden, die Messvorrichtung, die eine Sensoranordnung mit Sensoren aufweist, die Zustandsgrößen der gefrierbaren Substanz, wie Druck und Temperatur, erkennt, mit einer Ausgleichseinrichtung zu versehen, die auf einen Fluidraum, in dem die Sensoren jeweils eingesetzt sind, derart einwirkt, dass eine mit der Zunahme des Fluiddrucks einhergehende Volumenausdehnung der Substanz bei deren Einfrieren innerhalb des Fluidraums kompensiert ist.

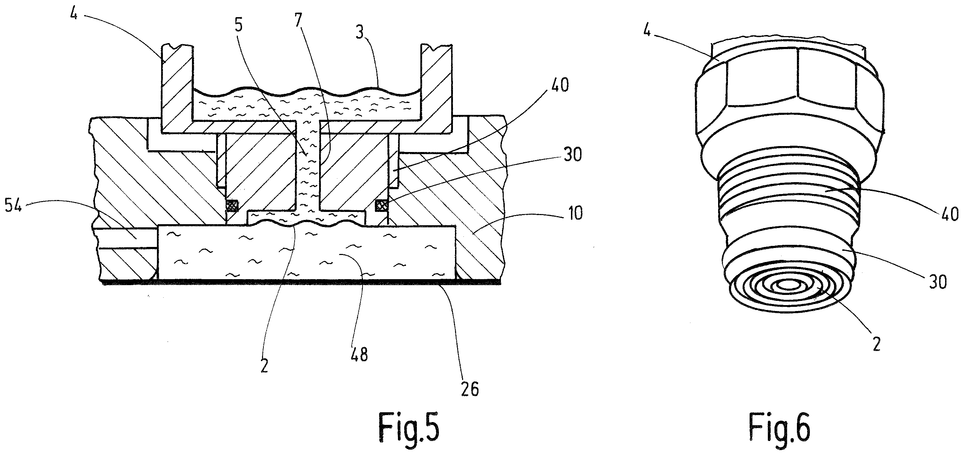

Hierfür stehen bei einem Ausführungsbeispiel der bekannten Lösung nach der Fig. 5 unter Bildung einer elastisch verformbaren Ausgleichseinrichtung Moosgummiteile zur Verfügung, durch deren Nachgiebigkeit eine Volumenvergrößerung durch eine gefrierende wässrige Harnstofflösung entsprechend kompensierbar ist zwecks Entlasten der Messfläche der Messeinrichtung, regelmäßig in Form einer Metallmembran. Als Moosgummi wird üblicherweise ein weitgehend geschlossenporiger, elastischer Schaumstoff eingesetzt, der gattungsgemäß zu den sog. Porengummis gehört. Obwohl das dahingehende Moosgummimaterial sich als ausgesprochen nachgiebig und mithin für die Kompensation solcher Volumenvergrößerungen als besonders geeignet erweist, hat sich insbesondere im lang andauernden Einsatz die dahingehende Lösung für Abgasnachbehandlungseinrichtungen als wenig geeignet erwiesen, weil die aggressive wässrige Harnstofflösung das Moosgummimaterial angreift und zerstört. So erweisen sich insbesondere die bei Moosgummi regelmäßig eingesetzten Kautschukmaterialien gegenüber dem aggressiven Harnstoff als wenig beständig. Auch benötigt das aus Moosgummimaterial nachgiebig gebildete Polster relativ viel Bauraum in den flüssigkeitsführenden Teilen des Gehäuses, der so eigentlich nicht zur Verfügung steht.

Die 10 2008 043 323 A1 offenbart eine Messvorrichtung zur Bestimmung eines Betriebsparameters, wie Druck, einer Flüssigkeit, die in einem Messraum innerhalb eines Gehäuses aufnehmbar ist, der von einer Messfläche einer Messeinrichtung und einer elastisch verformbaren Ausgleichseinrichtung mitbegrenzt ist, die beim Gefrieren der Flüssigkeit unter deren Expansionsdruck nachgibt und dabei den Messraum vergrößert, wobei die Ausgleichseinrichtung zumindest eine Membran aufweist, die randseitig in dem Gehäuse festgelegt ist und auf ihrer der Messfläche abgewandten Seite mit dem Gehäuse einen Bereich frei von dieser Flüssigkeit begrenzt.

Aus der WO 2005/029029 A1, der EP 2 580 437 A1, der EP 1 553 270 A1 und der US 2003/0019298 A1 gehen weitere Messvorrichtungen hervor.

Ausgehend von diesem Stand der Technik liegt der Erfindung die Aufgabe zugrunde, eine demgegenüber verbesserte Messvorrichtung zu schaffen, die einen lang andauernden Betrieb gewährleistet und wenig Bauraum einnimmt.

Diese Aufgabe wird durch eine Messeinrichtung gelöst mit den Merkmalen des Patentanspruchs 1 in seiner Gesamtheit.

Gemäß dem kennzeichnenden Teil des Anspruchs 1 besteht eine wesentliche Besonderheit der Erfindung darin, dass die Membran randseitig zwischen zwei Gehäuseteilen des Gehäuses eingespannt ist, dass der Wannenboden des Bereichs eine Abstützfläche für die Membran in deren voller Ausgleichsstellung bei maximal vergrößertem Messraum bildet, und dass die Messeinrichtung in einem an die endseitige Messfläche angrenzenden Teil einen Schraubeinsatz aufweist, der mit einem Außengewinde in ein hülsenförmiges Gehäuseinnenteil, das die Membran mit festlegt, über seinen Innengewindeabschnitt einschraubbar ist.

Dadurch, dass der von Flüssigkeit frei gehaltene Bereich wannenartig ausgebildet ist, wobei die Wannenoberseite eine Abstützfläche für die Membran in deren voller Ausgleichsstellung bei maximal vergrößertem Messraum bildet, bildet die Abstützung einen Schutz der Membran gegen Überbeanspruchung, so dass eine verhältnismäßig flexible Membran guter Nachgiebigkeit eingesetzt werden kann.

Dadurch, dass die Membran randseitig zwischen zwei Gehäuseteilen eingespannt ist, ist der sicher festgelegte Einbau der Membran mit einfacher Bauweise realisierbar.

Ferner ist erfindungsgemäß vorgesehen, dass die Ausgleichseinrichtung zumindest eine Membran aufweist, die randseitig in dem Gehäuse festgelegt ist und auf ihrer der Messfläche abgewandten Seite mit dem Gehäuse einen Bereich frei von dieser Flüssigkeit begrenzt. Mit einer Ausgleichseinrichtung in Form einer Membran lässt sich die erfindungsgemäße Messvorrichtung im Vergleich zu der ein Moosgummipolster benutzenden, bekannten Messvorrichtung in besonders platzsparender Bauweise ausbilden, weil ein Moospolster, wenn es eine genügende Nachgiebigkeit aufweisen und bei wirkendem Expansionsdruck eine ausreichende Volumenvergrößerung des Messraums zur Verfügung stellen soll, als verhältnismäßig voluminöser Baukörper ausgebildet sein muss. Demgegenüber kann eine Membran als Flächenelement sich in geringem Abstand entlang der Messfläche der Messeinrichtung und entlang einer den von Flüssigkeit freien Bereich begrenzenden Gehäusewand erstrecken, so dass die Gesamt-Messvorrichtung einen besonders geringen Bauraum benötigt. Zudem lässt sich die Membran mit einem gegenüber aggressiven Flüssigkeiten, wie Harnstofflösung, chemisch beständigen Werkstoff ausbilden, so dass die Gefahr der Beeinträchtigung und Zerstörung durch chemischen Eingriff vermieden ist und die Betriebssicherheit der Messvorrichtung im Langzeitbetrieb gewährleistet ist.

Mit Vorteil kann das Gehäuse mehrteilig ausgebildet sein.

Die Anordnung kann mit Vorteil so getroffen sein, dass die Membran randseitig eine Verstärkung aufweist, die in einer Ausnehmung zwischen den beiden benachbarten Gehäuseteilen aufgenommen ist, wobei beide Gehäuseteile gemeinsam die Ausnehmung bilden, wobei zwischen den Gehäuseteilen eine Schlitzführung gebildet ist, die die Membran durchgreift und wobei die Verstärkung die Membran in der Schlitzführung hält.

Dabei kann die Anordnung so getroffen sein, dass die die Verstärkung der Membran aufnehmende Ausnehmung zwischen den beiden Gehäuseteilen unter Bildung eines Ausweichraums zumindest in radialer Richtung gesehen größer ausgebildet ist als die radiale Erstreckung der Membranverstärkung. Dadurch, dass dergestalt die Membran mit radialem Spiel festgelegt ist, ist eine Auslenkung der Membran ohne Materialstauchung oder -streckung ermöglicht, so dass die Membran ein besonders nachgiebiges Ausgleichselement und damit einen sicheren Gefrierschutz bildet.

Bei vorteilhaften Ausführungsbeispielen bildet die aus der Schlitzführung austretende Membran in Richtung des Messraums einen wannenartigen Vorsprung, der unter zumindest teilweiser Abstützung an dem einen Gehäuseteil sich in Richtung des flüssigkeitsfreien Bereichs einwölbt, sobald die gefrierende wässrige Flüssigkeit sich im Messraum ausdehnt. Diese Form der Membran, bei der sich diese im unbelasteten Zustand mit ihrem Vorsprung in der Nähe der Messfläche befindet, von der sie sich bei Belastung entfernt, ermöglicht eine besonders flache Bauweise.

Die zwischen den beiden benachbarten Gehäuseteilen nach außen hin gebildete Ausnehmung kann von dem weiteren Gehäuseteil überdeckt sein, in das die Messeinrichtung eingebracht, insbesondere eingeschraubt ist.

Die Anordnung kann mit Vorteil derart getroffen sein, dass die Membran den Messraum zumindest insoweit überspannt, als dieser mit einer weiteren Membran abgedeckt ist, die der Messeinrichtung zugehörig ist und die Messfläche bildet.

Bei derartigen Ausführungsbeispielen der Messvorrichtung mit zwei Membranen kann mit Vorteil die eine Membran durch eine Elastomer-Membran und die der Messeinrichtung zugehörige, die Messfläche bildende Membran eine Metall-Membran sein. Bei der durch die Elastomer-Membran zur Verfügung gestellten weichen Nachgiebigkeit kann die der Messeinrichtung zugehörige Metall-Membran, ohne dass die Gefahr einer Beschädigung, wie Einreißen, bestünde, derart dünnwandig ausgebildet sein, dass sie auf Änderungen von Druck- oder Temperaturwerten in der Flüssigkeit unmittelbar reagiert. Dadurch lässt sich eine hohe Qualität der jeweiligen Messung zur Verfügung stellen, so dass die erfindungsgemäße Messvorrichtung in besonderem Maße für die Steuerung exakt dosierter Einspritzvorgänge zur Stickoxidreduzierung bei Abgasen einsetzbar ist.

Vorteilhafterweise kann die Messeinrichtung eine innenliegende, weitere Messmembran aufweisen, die von der frontseitigen, an den Messraum angrenzenden und die Messfläche bildenden Membran versetzt angeordnet ist, wobei sich zwischen diesen Membranen ein Druckübertragungsraum befindet, der mit einer Übertragungsflüssigkeit gefüllt ist. Eine mechanische Verbindung zur Übertragung der Messauslenkungen der die Messfläche bildenden Membran auf die in der Messeinrichtung innenliegende Sensorik kommt dadurch in Wegfall. Das Messergebnis ist daher auch nicht durch die bei mechanischer Übertragung auftretenden Reibungseinflüsse beeinträchtigt.

Hinsichtlich der Gehäusebauweise kann die Anordnung mit Vorteil so getroffen sein, dass das Gehäuseteil, das die Messeinrichtung aufweist, eine Fluidführung mit vorzugsweise mehreren Führungsabschnitten aufweist, die radial von der Seite des Gehäuses her in den Messraum ausmünden.

Nachstehend ist die Erfindung anhand von in der Zeichnung dargestellten Ausführungsbeispielen im Einzelnen erläutert. Es zeigen:
- Fig. 1: einen abgebrochen gezeichneten Längsschnitt eines Ausführungsbeispiels der erfindungsgemäßen Messvorrichtung, wobei ein zugeordneter Drucksensor schematisch vereinfacht angedeutet ist;
- Fig. 2: eine der Fig. 1 entsprechende Darstellung eines abgewandelten Ausführungsbeispiels;
- Fig. 3: ein gegenüber Fig. 1 und 2 vergrößert und abgebrochen gezeichneter Teillängsschnitt eines dritten Ausführungsbeispiels, wobei lediglich der dem Messraum benachbarte Bereich dargestellt ist;
- Fig. 4: eine Draufsicht auf das Gehäuse der Ausführungsbeispiele der Messvorrichtung;
- Fig. 5: einen schematisch vereinfachten, nicht maßstäblichen und abgebrochen gezeichneten Teillängsschnitt lediglich des an den Messraum angrenzenden Teilbereichs eines weiteren Ausführungsbeispiels; und
- Fig. 6: eine abgebrochen gezeichnete perspektivische Schrägansicht des gesondert dargestellten Drucksensors des Ausführungsbeispiels von Fig. 5.

Unter Bezugnahme auf die beigefügten Zeichnungen ist die Erfindung an Ausführungsbeispielen erläutert, die in Entsprechung zu den in Fig. 5 des genannten Dokuments DE 10 2012 010 981 A1 gezeigten Messeinrichtungen zur Bestimmung von Betriebsparametern einer wässrigen Harnstofflösung dienen, die zur selektiven katalytischen Reduktion von Stickoxiden in Abgasen vorgesehen ist. Dabei ist jeweils das Beispiel eines Drucksensors 4 dargestellt, dessen Messfläche 2 vom Druck der Flüssigkeit beaufschlagt ist. Die mit der Messfläche 2 wirkungsmäßig verbundenen Komponenten des Drucksensors 4 entsprechen dem Stand der Technik. In der Zeichnung ist daher vom Drucksensor 4 lediglich die zugehörige elektrische Steckverbindung 6 gezeigt. Die Messfläche 2 ist bei dem gezeigten Beispiel durch eine vom Flüssigkeitsdruck beaufschlagte Messmembran gebildet, wie sie in Fig. 5 des bekannten, genannten Dokuments mit 88 bezeichnet ist. Bei Auslegung als Temperatursensor ist anstelle der die Messfläche 2 bildenden Messmembran ein Temperaturfühler (nicht gezeigt) vorgesehen.

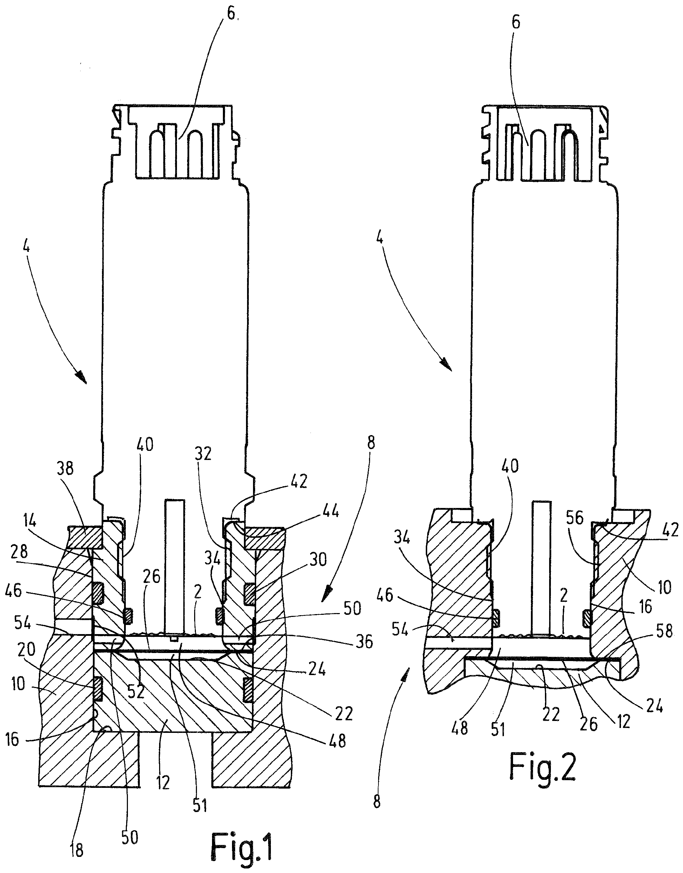

Die erfindungsgemäße Messvorrichtung weist ein als Ganzes mit 8 bezeichnetes Gehäuse auf. Dieses ist bei dem in Fig. 1 gezeigten Ausführungsbeispiel dreiteilig ausgebildet, mit einem Gehäuseaußenteil 10, einem Gehäusebodenteil 12 und einem Gehäuseinnenteil 14. Für den Einbau der Messeinrichtung weist das Gehäuseaußenteil 10 eine Bohrung 16 auf, die sich in dem in den Figuren unten liegenden Endbereich unter Bildung einer Ringschulter 18 verjüngt. Diese bildet die Anlagefläche für das vom oberen Bohrungsende her eingesetzte Gehäusebodenteil 12, das in der Bohrung 16 mittels eines Dichtringes 20 abgedichtet ist. Während die an der Ringschulter 18 anliegende untere Endfläche des Gehäusebodenteils 12 ebenflächig ist, weist die gegenüberliegende, obere Endfläche eine zur Bohrung 16 koaxiale Vertiefung 22 auf, die eine wannenartige Form besitzt. Der Durchmesser der Vertiefung 22 ist derart bemessen, dass sie von einem unvertieften Ringrand 24 umgeben ist, dessen Breite etwa einem Sechstel des Durchmessers des Gehäusebodenteils 12 entspricht. Der Ringrand 24 bildet die Auflage und die Spannfläche für eine die Ausgleichseinrichtung bildende Membran 26, die die Vertiefung 22 des Gehäusebodenteils 12 überspannt. Das Festklemmen der Membran 26 am Ringrand 24 erfolgt mittels des Gehäuseinnenteils 14. Dieses besitzt die Form einer Hülse, die mit einem kreiszylinderförmigen Umfangsabschnitt 28 in der Bohrung 16 des Gehäuseaußenteils 10 aufgenommen und dort mittels eines Dichtringes 30 abgedichtet ist. Der innere Durchgang des hülsenförmigen Gehäuseinnenteils 14 weist am in Fig. 1 oben liegenden Endbereich einen Innengewindeabschnitt 32, einen sich daran anschließenden kreiszylindrischen Wandabschnitt 34 und einen daraus folgenden Endrand 36 auf. Letzterer bildet die Klemmfläche zum Spannen der Membran 26 am Ringrand 24 des Gehäusebodenteils 12. Das Gehäuseinnenteil 14 ist hierfür mittels eines Spannringes 38 in der Bohrung 16 des Gehäuseaußenteils 10 gespannt.

Der Sensor 4 bildet erfindungsgemäß in dem an die endseitige Messfläche 2 angrenzenden Teil einen Schraubeinsatz, der mit einem Außengewinde 40 in das hülsenförmige Gehäuseinnenteil 14 mit seinem Innengewindeabschnitt 32 einschraubbar ist. Bei der in Fig. 1 gezeigten, eingeschraubten Position, bei der der Sensor 4 mit einer Innenschulter 42 am zugewandten Endrand 44 des Gehäuseinnenteils 14 anliegt und mittels eines Dichtringes 46 am Wandabschnitt 34 des Gehäuseinnenteils 14 abgedichtet ist, befindet sich die Messfläche 2 in einem Abstand von der Membran 26 der Ausgleichseinrichtung, so dass für die zu überwachende Flüssigkeit ein Messraum 48 gebildet ist. Zur Bildung der Fluidverbindung zwischen dem Messraum 48 und dem die zu überwachende Flüssigkeit führenden Leitungssystem sind im Gehäuseinnenteil 14 Fluidführungsabschnitte in Form von mehreren, in Radialrichtung in den Messraum einmündenden Kanälen 50 vorgesehen, die über eine in den Umfang des Gehäuseinnenteils 14 eingearbeitete Tasche 52 mit einer Fluidführung 54 im Gehäuseaußenteil 10 in Verbindung sind. Für den Betrieb mit aggressiven Flüssigkeiten, wie einer wässrigen Harnstofflösung, ist die Membran 26 aus einem Material hergestellt, das bei der gewünschten Elastizität gegenüber der betreffenden Flüssigkeit chemisch beständig ist. Vorteilhafterweise ist die Membran 26 aus einem Elastomer gebildet. Die Tiefe der wannenartigen Vertiefung 26 im Gehäusebodenteil 12, die den von Flüssigkeit freien Freiraum 51 für die Ausgleichsbewegungen der Membran 26 bildet, ist derart bemessen, dass bei voller Ausgleichsstellung, d.h. bei maximal vergrößertem Volumen des Messraums 48, der Wannenboden die Abstützfläche für die voll ausgelenkte Membran 26 bildet. Der durch Auslenken der Membran 26 zur Verfügung gestellte Volumenausgleich gewährleistet einen effektiven Gefrierschutz, so dass die Messfläche 2 durch eine verhältnismäßig dünne Metallmembran gebildet sein kann und dadurch hohe Messgenauigkeiten zu erreichen sind.

Die Fig. 2 zeigt ein abgewandelten Ausführungsbeispiel, das sich vom erstbeschriebenen Beispiel dadurch unterscheidet, dass das Gehäuse 8 zweiteilig ausgebildet ist und lediglich das Gehäuseaußenteil 10 und das Gehäusebodenteil 12 aufweist. Bei Fehlen des Gehäuseinnenteils 14 ist der Sensor 4 mit seinem am Einschraubabschnitt befindlichen Außengewinde 40 unmittelbar in ein Innengewinde 56 in der Bohrung 16 des Gehäuseaußenteils 10 eingeschraubt. Bei Fehlen des Gehäuseinnenteils 14 bildet das Gehäuseaußenteil 10 selbst mit dem Endrand 58 seiner Bohrung 16 die Spannfläche zum Festklemmen der Membran 26 am Ringrand 24 des Gehäusebodenteils 12. Dabei ist die Spannkraft für das Festklemmen der Membran 26 dadurch gebildet, dass das Bodenteil 12 als Schraubeinsatz ausgebildet ist, der über eine in der abgebrochenen Darstellung von Fig. 2 nicht gezeigte Verschraubung in das Gehäuseaußenteil 10 eingeschraubt ist. Die Fluidführung 54 im Gehäuseaußenteil 10 mündet bei diesem Ausführungsbeispiel unmittelbar in den Messraum 48 ein. Die Funktionsweise des Ausführungsbeispiels von Fig. 2 entspricht im Übrigen dem Beispiel von Fig. 1.

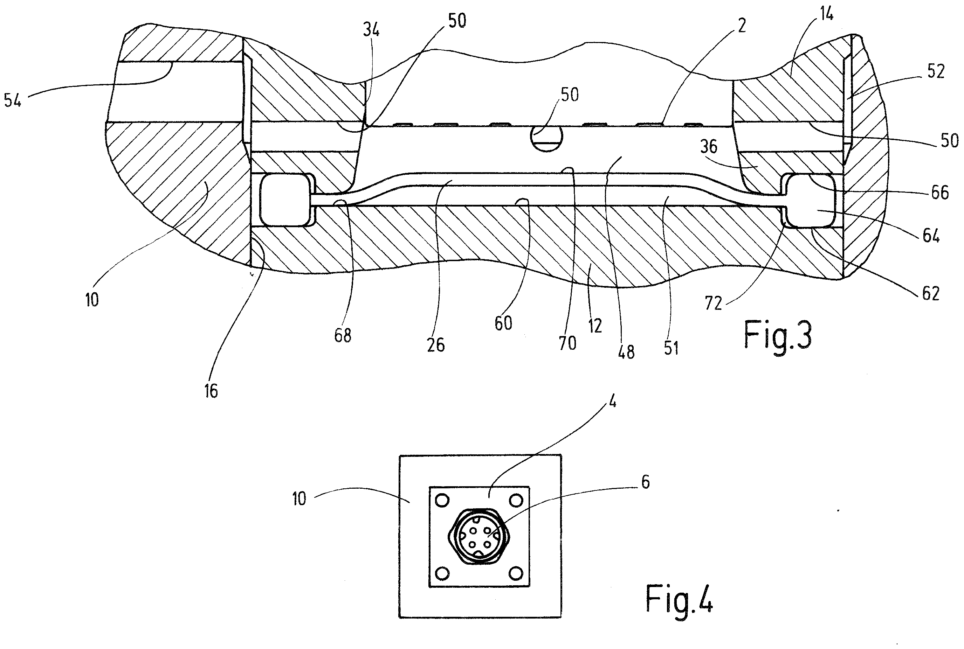

Das Ausführungsbeispiel von Fig. 3 entspricht demjenigen von Fig. 1, abgesehen davon, dass die aus einem Elastomer gebildete Membran 26 eine spezielle Formgebung besitzt und in besonderer Weise zwischen Gehäusebodenteil 12 und Gehäuseinnenteil 14 festgelegt ist. Des Weiteren besitzt das Gehäusebodenteil 12 anstelle der am oberen Ende befindlichen Vertiefung 22 eine ebene Endfläche 60, die sich über den gesamten Zentralbereich bis in die Nähe des Umfangs des Gehäusebodenteils 12 erstreckt, wo die Endfläche 60 in eine radial versetzte Stufenfläche 62 übergeht, die sich bis zum Außenumfang erstreckt. Die Membran 26 weist eine wulstartige Randverstärkung 64 auf, die im eingebauten Zustand, wie die Figur zeigt, auf der vertieften Stufenfläche 62 aufliegt. Das Gehäuseinnenteil 14 übergreift mit seinem Endrand 36 sowohl die Stufenfläche 62 am Gehäusebodenteil 12 als auch einen sich anschließenden Teil des Randes der ebenen Endfläche 60. Fluchtend zur Stufenfläche 62 des Gehäusebodenteils 12 ist auch im Endrand 36 des Gehäuseinnenteils 14 eine axial versetzte Stufenfläche 66 gebildet, die zusammen mit der Stufenfläche 62 einen Aufnahmeraum für die Randverstärkung 64 bildet. Bei der in Fig. 3 gezeigten Einbauposition ist zwischen der ebenen Endfläche 60 des Gehäusebodenteils 12 und dem Endrand 36 des Gehäuseinnenteils 14 eine Schlitzöffnung 68 gebildet, durch die hindurch sich der an die Randverstärkung 64 angrenzende Teil der Membran 26 erstreckt. Dieser Zentralteil der Membran 26, der den Messraum 48 begrenzt, hat im unbelasteten Zustand, d.h. ohne im Gefrierfall wirkenden Expansionsdruck, die Form eines in Richtung des Messraums 48 wannenartig ausgebildeten Vorsprungs 70. Obwohl beim Ausführungsbeispiel von Fig. 3 die Endfläche 60 des Gehäusebodenteils ebenflächig ist und daher keine wannenartige Vertiefung 22 vorhanden ist, ist durch die Form der Membran 26, die sich mit ihrem wannenartigen Vorsprung in Richtung des Messraums 48 erstreckt, im normalen Betriebszustand, d.h. ohne Gefrierbedingungen, der für Ausgleichsbewegungen zur Verfügung stehende Freiraum 51 zwischen Membran 26 und ebener Endfläche 60 des Gehäusebodenteils 12 gebildet. Bei durch Gefrieren auftretendem Expansionsdruck wölbt sich die Membran 26 in Richtung der den Freiraum 51 begrenzenden ebenen Endfläche 60 ein, die die Abstützung der Membran 26 bei voller Ausgleichsstellung der Membran 26 bildet. Wie Fig. 3 zeigt, ist die Ausnehmung 62, 64 nach außen hin durch den übergreifenden Gehäuseaußenteil geschlossen. Die radialen Längen der Stufenflächen 62 und 66 sind so gewählt, dass die radiale Erstreckung der Ausnehmung 62, 64 größer ist als die radiale Dicke der Membranverstärkung 64. In der Ausnehmung 62, 64 verbleibt daher für die Randverstärkung 64 ein radialer Ausgleichsraum 72, so dass die Membran 26 mit radialem Spiel festgelegt ist und Auslegungen der Membran 26 ohne Materialstauchung oder -streckung erfolgen können.

Die Fig. 5 und 6 verdeutlichen ein weiteres Ausführungsbeispiel der Erfindung, das sich vom Ausführungsbeispiel von Fig. 2 insofern unterscheidet, als die Messeinrichtung 4 durch einen in Fig. 6 gesondert dargestellten Drucksensor gebildet ist, der zusätzlich zu einer frontbündig angeordneten Membran 2, die an den Messraum 48 angrenzt und die Messfläche bildet, eine innenliegende Messmembran 3 aufweist. Beide Membranen 2 und 3 sind feine Metallmembranen. Durch den Schraubeinsatz, der wie bei Fig. 2 mit Außengewinde 40 in das Gehäuseteil 10 eingeschraubt ist, erstreckt sich ein zentraler Durchgang 7 von der Innenseite der frontbündigen Membran 3 zur zugewandten Fläche der innenliegenden Messmembran und bildet einen Druckübertragungsraum 5, der mit einer Flüssigkeit gefüllt ist. Die Füllung, beispielsweise mit Silikonöl, ersetzt eine mechanische Übertragung der Messauslenkung der die Messfläche bildenden Membran 2 und ermöglicht eine vereinfachte Bauweise, die von Beeinträchtigungen mit Spiel und mechanischer Reibung frei ist.

## Patentansprüche

1. Messvorrichtung zur Bestimmung eines Betriebsparameters, wie Druck oder Temperatur, einer wasserhaltigen Flüssigkeit, insbesondere einer wässrigen Harnstofflösung, die in einem Messraum (48) innerhalb eines Gehäuses (8) aufnehmbar ist, der von einer Messfläche (2) einer Messeinrichtung (4) und einer elastisch verformbaren Ausgleichseinrichtung (26) mitbegrenzt ist, die beim Gefrieren der Flüssigkeit unter deren Expansionsdruck nachgibt und dabei den Messraum (48) vergrößert, wobei die Ausgleichseinrichtung zumindest eine Membran (26) aufweist, die randseitig in dem Gehäuse (8) festgelegt ist und auf ihrer der Messfläche (2) abgewandten Seite mit dem Gehäuse (8) einen Bereich (51) frei von dieser Flüssigkeit begrenzt, der wannenartig ausgebildet ist, **dadurch gekennzeichnet, dass** die Membran (26) randseitig zwischen zwei Gehäuseteilen (12,14; 10) des Gehäuses (8) eingespannt ist, dass der Wannenboden (22) des Bereichs (51) eine Abstützfläche für die Membran (26) in deren voller Ausgleichsstellung bei maximal vergrößertem Messraum (48) bildet, und dass die Messeinrichtung (4) in einem an die endseitige Messfläche (2) angrenzenden Teil einen Schraubeinsatz aufweist, der mit einem Außengewinde (40) in ein hülsenförmiges Gehäuseinnenteil (14), das die Membran (26) mit festlegt, über seinen Innengewindeabschnitt (32) einschraubbar ist.

2. Messvorrichtung nach Anspruch 1, **dadurch gekennzeichnet, dass** das Gehäuse (8) mehrteilig ausgebildet ist und dass die Membran (26) randseitig zwischen zwei Gehäuseteilen (12, 14; 10) eingespannt ist.

3. Messvorrichtung nach Anspruch 1 oder 2, **dadurch gekennzeichnet, dass** die Membran (26) randseitig eine Verstärkung (64) aufweist, die in einer Ausnehmung (62, 66) zwischen den beiden benachbarten Gehäuseteilen (12, 14) aufgenommen ist, dass beide Gehäuseteile (12, 14) gemeinsam die Ausnehmung (62, 66) bilden, dass zwischen den Gehäuseteilen (12, 14) eine Schlitzführung (68) gebildet ist, die die Membran (26) durchgreift, und dass die Verstärkung (64) die Membran (26) in der Schlitzführung (68) hält.

4. Messvorrichtung nach Anspruch 3, **dadurch gekennzeichnet, dass** die die Verstärkung (64) der Membran (26) aufnehmende Ausnehmung (62, 66) zwischen den beiden Gehäuseteilen (12, 14) unter Bildung eines Ausweichraums (72) zumindest in radialer Richtung gesehen größer ausgebildet ist als die radiale Erstreckung der Membranverstärkung (64).

5. Messvorrichtung nach Anspruch 3 oder 4, **dadurch gekennzeichnet, dass** die aus der Schlitzführung (68) austretende Membran (26) in Richtung des Messraums (48) einen wannenartigen Vorsprung (70) bildet, der unter zumindest teilweiser Abstützung an dem einen Gehäuseteil (12) sich in Richtung des flüssigkeitsfreien Bereichs (51) einwölbt, sobald die gefrierende wässrige Flüssigkeit sich im Messraum (48) ausdehnt.

6. Messvorrichtung nach einem der Ansprüche 3 bis 5, **dadurch gekennzeichnet, dass** die Ausnehmung (62, 66) zwischen den beiden Gehäuseteilen (12, 14) nach außen hin von dem Gehäuseteil (10) überdeckt ist, in das die Messeinrichtung (4) eingebracht, insbesondere eingeschraubt ist.

7. Messvorrichtung nach einem der vorstehenden Ansprüche, **dadurch gekennzeichnet, dass** die Membran (26) den Messraum (48) zumindest insoweit überspannt, als dieser mit einer weiteren Membran (2) abgedeckt ist, die der Messeinrichtung (4) zugehörig ist und die Messfläche bildet.

8. Messvorrichtung nach Anspruch 7, **dadurch gekennzeichnet, dass** die eine Membran (26) eine Elastomermembran ist und die der Messeinrichtung (4) zugehörige, die Messfläche bildende Membran (2) eine Metallmembran ist.

9. Messvorrichtung nach Anspruch 7 oder 8, **dadurch gekennzeichnet, dass** die Messeinrichtung (4) eine innenliegende, weitere Messmembran (3) aufweist, die von der frontseitigen, an den Messraum (48) angrenzenden und die Messfläche bildenden Membran (2) versetzt angeordnet ist, und dass sich zwischen diesen Membranen (2 und 3) ein Druckübertragungsraum (5) befindet, der mit einer Übertragungsflüssigkeit gefüllt ist.

10. Messvorrichtung nach einem der vorstehenden Ansprüche, **dadurch gekennzeichnet, dass** das Gehäuseteil (10, 14), das die Messeinrichtung (4) aufweist, eine Fluidführung (54) mit vorzugsweise mehreren Führungsabschnitten (50) aufweist, die radial von der Seite des Gehäuses (8) her in den Messraum (48) ausmünden.

## Claims

1. Measurement device for determining an operating parameter, such as pressure or temperature, for a water-based liquid, especially an aqueous urea solution, which can be received in a measurement chamber (48) inside a housing (8), said measurement chamber being delimited by a measurement surface (2) of a measurement device (4) and an elastically deformable compensating device (26), which yields to expansion pressure when the liquid freezes and expands the measurement chamber (48) in the process, said compensating device comprising at least one membrane (26), the edges of which are fixed in the housing (8) and which, together with the housing (8), delimits a region (51) that is free from this liquid on its side facing away from the measurement surface (2), said region being designed in the form of a tray, **characterised in that** the edges of the membrane (26) are clamped between two housing sections (12, 14; 10) of the housing (8), **in that** the base of the tray (22) in the region (51) forms a support surface for the membrane (26) in its full compensation position with the measurement chamber (48) expanded to its maximum, and **in that** the measurement device (4) comprises a screw insert in a section adjacent to the end measurement surface (2), said screw insert being able to be screwed with an outer thread (40) into a sleeve-shaped inner housing section (14), which also fixes the membrane (26) in place (26), by means of its inner threaded section (32).

2. Measurement device according to claim 1, **characterised in that** the housing (8) is designed in a plurality of sections, and **in that** the edges of the membrane (26) are clamped between two housing sections (12, 14; 10).

3. Measurement device according to either claim 1 or 2, **characterised in that** the edges of the membrane (26) comprise a reinforcement (64), which is held in a recess (62, 66) between the two adjacent housing sections (12, 14), **in that** both housing sections (12, 14) jointly form the recess (62, 66), **in that** a slot (68) is formed between the housing sections (12, 14), the membrane (26) passing through said slot, and **in that** the reinforcement (64) holds the membrane (26) in the slot (68).

4. Measurement device according to claim 3, **characterised in that** the recess (62, 66) holding the reinforcement (64) of the membrane (26) between the two housing sections (12, 14) is designed to be larger, at least in the radial direction, than the radial extension of the membrane reinforcement (64), forming an expansion area.

5. Measurement device according to either claim 3 or 4, **characterised in that** the membrane (26) exiting from the slot (68) in the direction of the measurement chamber (48) forms a tray-shaped projection (70), which is arched in the direction of the liquid-free region (51) with at least partial support from one housing section (12) as soon as the freezing aqueous liquid expands in the measurement chamber (48).

6. Measurement device according to any one of claims 3 to 5, **characterised in that** the recess (62, 66) between the two housing sections (12, 14) is externally covered by the housing section (10), into which the measurement device (4) is inserted, or in particular screwed.

7. Measurement device according to any one of the preceding claims, **characterised in that** the membrane (26) extends over the measurement chamber (48) at least insofar as this is covered by an additional membrane (2), which is associated with the measurement device (4) and forms the measurement surface.

8. Measurement device according to claim 7, **characterised in that** one membrane (26) is an elastomer membrane and the membrane (2) associated with the measurement device (4) and forming the measurement surface is a metal membrane.

9. Measurement device according to either claim 7 or 8, **characterised in that** the measurement device (4) comprises an additional internal measurement membrane (3), which is positioned offset from the membrane (2) on the front side, which is adjacent to the measurement chamber (48) and which forms the measurement surface, and **in that** a pressure transfer chamber (5) is located between these membranes (2 and 3), said chamber being filled with a transfer liquid.

10. Measurement device according to any one of the preceding claims, **characterised in that** the housing section (10, 14) comprising the measurement device (4) comprises a fluid guide (54) preferably with a plurality of guide sections (50), which lead radially into the measurement chamber (48) from the side of the housing (8).

## Revendications

1. Dispositif de mesure pour déterminer un paramètre de fonctionnement, comme la pression ou la température, d'un liquide aqueux, notamment d'une solution aquèuse d'urée, qui peut être reçu dans un espace (48) de mesure à l'intérieur d'un boîtier (8), délimité par une surface (2) de mesure d'un dispositif (4) de mesure et par un dispositif (26) de compensation, déformable élastiquement, qui, à la congélation du liquide, cède sous sa pression de dilatation et agrandit ainsi l'espace (48) de mesure, le dispositif de compensation ayant au moins une membrane (26), qui est fixée, du côté du bord, au boîtier (8) et qui, du côté loin de la surface (2) de mesure, délimite, avec le boîtier (8), une région (51) sans ce liquide, constituée en cuvette, **caractérisé en ce que** la membrane (26) est bloquée du côté du bord entre deux parties (12, 14 ; 10) du boîtier (8), **en ce que** le fond (22) en cuvette de la région (51) forme une surface d'appui pour la membrane (26) dans sa position de compensation complète, alors que l'espace (48) de mesure est agrandi au maximum, et **en ce que** le dispositif (4) de mesure a, dans une partie voisine de la surface (2) de mesure du côté de l'extrémité, un insert de vissage, qui peut être vissé, par sa partie (32) taraudée, avec un filetage (40) d'une partie (14) intérieure en forme de douille du boîtier, qui fixe la membrane (26).

2. Dispositif de mesure suivant la revendication 1, **caractérisé en ce que** le boîtier (8) est en plusieurs parties et **en ce que** la membrane (26) est bloquée, du côté du bord, entre deux parties (12, 14 ; 10) du boîtier.

3. Dispositif de mesure suivant la revendication 1 ou 2, **caractérisé en ce que** la membrane (26) a, du côté du bord, un renfort (64), qui est reçu dans un évidement (62, 66) entre les deux parties (12, 14) voisines du boîtier, **en ce que** les deux parties (12, 14) du boîtier forment conjointement l'évidement (62, 66), **en ce qu'**entre les parties (12, 14) du boîtier est formé un guidage (68) à fente, qui prend la membrane (26) et **en ce que** le renfort (64) maintient la membrane (26) dans le guidage (68) à fente.

4. Dispositif de mesure suivant la revendication 3, **caractérisé en ce que** l'évidement (62, 66) recevant le renfort (64) de la membrane (26), entre les deux parties (12, 14) du boîtier, avec constitution d'un espace (72) d'effacement, est plus grand, au moins considéré dans la direction radiale, que l'étendue radiale du renfort (64) de la membrane.

5. Dispositif de mesure suivant la revendication 3 ou 4, **caractérisé en ce que** la membrane (26), sortant du guidage (68) à fente, forme, dans la direction de l'espace (48) de mesure, une saillie (70) de type en cuvette, qui, en s'appuyant, au moins en partie, sur l'une des parties (12) du boîtier, se voûte en direction de la région (51) sans liquide dès que le liquide aqueux congelé se dilate dans l'espace (48) de mesure.

6. Dispositif de mesure suivant l'une des revendications 3 à 5, **caractérisé en ce que** l'évidement (62, 66) entre les deux parties (12, 14) du boîtier est recouvert vers l'extérieur par la partie (10) du boîtier, dans laquelle est logé le dispositif (4) de mesure, en y étant notamment vissé.

7. Dispositif de mesure suivant l'une des revendications précédentes, **caractérisé en ce que** la membrane (26) enjambe l'espace (48) de mesure, au moins pour autant que celui-ci est recouvert d'une autre membrane, qui appartient au dispositif (4) de mesure et qui forme la surface de mesure.

8. Dispositif de mesure suivant la revendication 7, **caractérisé en ce que** la une membrane (26) est une membrane en élastomère et la membrane (2), appartenant au dispositif (4) de mesure et formant la surface de mesure, est une membrane métallique.

9. Dispositif de mesure suivant la revendication 7 ou 8, **caractérisé en ce que** le dispositif (4) de mesure a une autre membrane (3) intérieure de mesure, qui est disposée de manière décalée de la membrane (2) du côté avant, voisine de l'espace (48) de mesure et formant la surface de mesure, et **en ce qu'**entre ces membranes (2 et 3) se trouve un espace (5) de transmission de la pression, qui est empli d'un liquide de transmission.

10. Dispositif de mesure suivant l'une des revendications précédentes, **caractérisé en ce que** la partie (10, 14) du boîtier, qui a le dispositif (4) de mesure, a une conduite (54) de fluide, ayant de préférence plusieurs tronçons (50) de conduite, qui débouchent radialement, à partir du côté du boîtier (8), dans l'espace (48) de mesure.
